(19) **Europäisches Patentamt / European Patent Office / Office européen des brevets**

(11) **EP 4 376 352 A1**

(12) # DEMANDE DE BREVET EUROPEEN

(43) Date de publication:
**29.05.2024 Bulletin 2024/22**

(21) Numéro de dépôt: **23211574.1**

(22) Date de dépôt: **22.11.2023**

(51) Classification Internationale des Brevets (IPC):
**H04L 9/30** $^{(2006.01)}$

(52) Classification Coopérative des Brevets (CPC):
**H04L 9/3073**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **22.11.2022 FR 2212137**

(71) Demandeur: **Commissariat à l'énergie atomique et aux énergies alternatives 75015 Paris (FR)**

(72) Inventeurs:
• **LOISEAU, Antoine**
  **38054 Grenoble Cedex 9 (FR)**
• **LESAIGNOUX, Doryan**
  **38054 Grenoble Cedex 09 (FR)**
• **CARMONA, Mikael**
  **38054 Grenoble Cedex 09 (FR)**

(74) Mandataire: **Brevalex**
  **Tour Trinity**
  **1 B Place de la Défense**
  **92400 Courbevoie (FR)**

(54) **SYSTÈME DE CHIFFREMENT HIÉRARCHIQUE HYBRIDE**

(57) La présente invention concerne un schéma cryptographique hybride pour un réseau de noeuds, notamment un réseau IoT, composé d'un premier sous-ensemble et un sous-ensemble de noeuds disjoints, les ressources calculatoires des noeuds du premier sous-ensemble étant supérieures aux ressources calculatoires des noeuds du second sous-ensemble, ledit schéma comprenant un premier schéma cryptographique fonctionnel ($SC_m$) déployé sur le premier sous-ensemble de noeuds et un second schéma cryptographique fonctionnel ($SC_s$), déployé sur le second sous-ensemble de noeuds, une primitive cryptographique à la racine du second schéma cryptographique générant une couple de clés maîtresses privée et publique à partir d'un germe ($seed_s$), ledit germe étant obtenu par une primitive cryptographique de connexion à partir au moins de la clé privée d'un noeud extrémal du premier sous-ensemble, ladite primitive cryptographique de connexion étant une fonction à sens unique.

[Fig. 5]

FIG. 5

**Description**

**DOMAINE TECHNIQUE**

La présente invention concerne le domaine de la cryptographie asymétrique (ou chiffrement à clé publique) et, plus généralement, celui du chiffrement basé sur l'identité (IBE) voire du chiffrement fonctionnel (FE). Elle trouve notamment application dans le domaine de l'Internet des Objets ou IoT (*Internet of Things*).

**ÉTAT DE LA TECHNIQUE ANTÉRIEURE**

La cryptographie à clé publique ou, de manière équivalente, la cryptographie asymétrique, est bien connue de l'état de la technique. Dans un système de cryptographie asymétrique, chaque noeud dispose d'une paire de clés constituée par une clé publique et une clé privée. Un noeud émetteur souhaitant transmettre un message au récepteur de manière confidentielle, chiffre ce message avec la clé publique du récepteur. Le récepteur peut alors déchiffrer le message ainsi chiffré avec sa clé privée correspondante.

Les paires de clés des différents noeuds d'un réseau sont gérées par une infrastructure dite PKI (*Public Key Infrastructure*), comprenant des composantes logicielles et matérielles assurant la logistique des clés au sein du réseau. Une telle infrastructure assure différentes missions, notamment la génération des paires de clés publiques -privées pour les différents noeuds et la génération des certificats de clés publiques ainsi que leur authentification. Un certificat permet de rattacher une clé publique à l'identité de son détenteur, le certificat étant généré par une autorité de certification, un tiers de confiance, voire par le détenteur lui-même (auto-certification). L'infrastructure PKI prend également en charge la diffusion, la publication, la vérification et la révocation des certificats de clés publiques. Ainsi, les différents noeuds peuvent avoir accès à l'ensemble des certificats et connaître leurs statuts respectifs. L'infrastructure PKI assure la protection, le séquestre et le recouvrement des clés privées. Le séquestre des clés privées permet de recouvrer une clé privée qui aurait été perdue, par exemple. Enfin, l'infrastructure PKI effectue l'archivage des certificats et la journalisation des actions sur les clés. Il est ainsi possible de retracer l'historique des opérations sur ces clés (génération, révocation, archivage).

La gestion, la révocation et l'archivage des certificats de clés publiques (selon la norme X.509) rendent les infrastructures PKI relativement complexes, notamment dans le cas des réseaux IoT où de nombreux noeuds sont fréquemment ajoutés, supprimés ou mis à jour.

Les architectures basées sur l'identité ou IBE (*Identity-Based Encryption*) voire sur des attributs ou ABE (*Attribute-Based Encryption*) permettent de se passer de tels certificats. Ainsi par exemple, dans un système IBE mettant en jeu un noeud émetteur et un noeud destinataire, le noeud émetteur utilise directement un identifiant propre au noeud destinataire pour chiffrer et/ou signer le message qu'il souhaite lui transmettre, le noeud destinataire le déchiffrant à l'aide de sa clé privée correspondante. De manière similaire, dans un système ABE, le noeud émetteur utilise des attributs du noeud destinataire pour chiffrer et/ou signer un tel message. Ainsi, que ce soit dans un système IBE ou ABE, il n'est pas nécessaire de connaître la clé publique du destinataire, la connaissance de son identifiant (IBE) ou de ses attributs (ABE) suffisent.

Plus précisément, dans le cas d'un système IBE, une autorité dénommée PKG (*Public Key Generator*) ou KGC (*Key Generator Center*) est chargée de générer un couple de clés constituée d'une clé maîtresse publique (*Mpk*) et d'une clé maîtresse privée correspondante (*Msk*). Alors que la clé publique PP est commune à l'ensemble du réseau, la clé privée *Msk* est utilisée par le générateur PKG pour générer les clés privées des différents utilisateurs à partir de leurs identifiants respectifs. Un noeud destinataire recevant un message chiffré (à partir de son identifiant) peut le déchiffrer à l'aide de sa clé privée obtenue du générateur PKG.

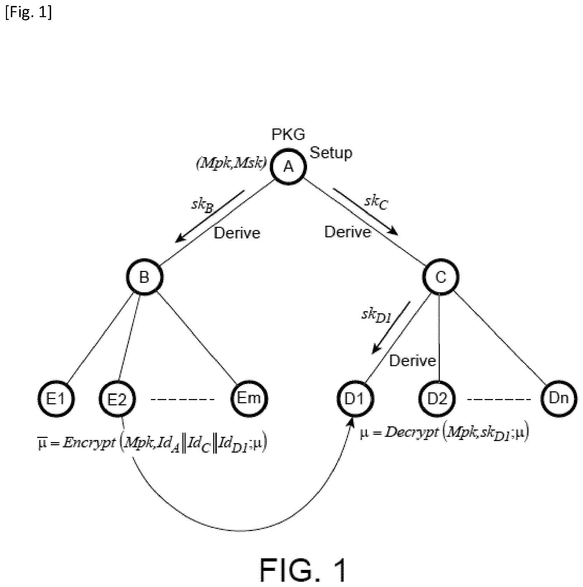

L'architecture IBE est particulièrement intéressante pour les réseaux d'objets connectés (IoT) en raison de sa simplicité de déploiement. En pratique, notamment pour des réseaux de grande taille, on utilise une architecture IBE hiérarchisée dénommée HIBE (*Hierarchical Identity Based Encryption*) dont le principe est illustré en Fig. 1.

Dans une telle architecture, un noeud du réseau joue le rôle de racine en tant que générateur PKG (voire en recevant le couple de clés maîtresses d'un tel générateur). L'identité d'un noeud du réseau est définie par la concaténation des identifiants des noeuds traversés par le chemin de l'arborescence allant de la racine jusqu'au noeud en question.

Le schéma HIBE est entièrement défini par quatre primitives, autrement dit par quatre algorithmes de base : La primitive *Setup*($1^\lambda$, *d*) où *d* est la profondeur de l'arborescence et $\lambda$ est le niveau de sécurité (exprimé en nombre de bits). Cette primitive génère le couple de clés maîtresses (*Msk, Mpk*). Cette primitive est exécutée par la racine.

La primitive *Derive* ou *KeyGen* est exécutée par chaque noeud de l'arborescence hormis ses noeuds extrémaux (feuilles). Elle permet à un noeud d'obtenir la clé privée de chacun de ses noeuds fils, à partir de sa propre clé privée, de la clé maîtresse, *Mpk*, et de l'identité de chaque noeud fils. Ainsi, le noeud C obtient la clé privée, $sk_{Dn}$, de son noeud fils $D_n$ en calculant $sk_{Dn} = Derive(Mpk, Id_A \| Id_C \| Id_{Dn}, sk_C)$ où $Id_A$, $Id_C$, $Id_{Dn}$ sont les identifiants respectifs des noeuds A, C et $D_n$ où A est la racine de l'arborescence. Le noeud C peut transmettre hors ligne (par exemple au moyen d'un canal auxiliaire confidentiel) à chacun de ses noeuds fils sa clé privée ainsi obtenue.

Ainsi, les clés privées (ou secrètes) des différents noeuds du réseau peuvent être générées de proche en proche à partir de la racine vers les noeuds extrémaux.

Enfin, les primitives *Encrypt* et *Decrypt* peuvent être exécutées par n'importe quel noeud de l'arborescence. La primitive *Encrypt* est utilisée par un noeud émetteur pour chiffrer un message $\mu$ à l'aide de l'identité du noeud destinataire et de la clé publique maîtresse. Le noeud destinataire peut alors déchiffrer le message reçu à l'aide de sa clé privée et de la clé publique maîtresse.

Ainsi par exemple, sur la figure, le noeud E2 souhaitant transmettre le message $\mu$ au noeud D1 le chiffre au moyen de $\overline{\mu} = Encrypt(Mpk, Id_A\|Id_C\|Id_{D1};\mu)$ et le noeud D1 le déchiffre au moyen de $Decrypt(Mpk, sk_{D1};\overline{\mu})$.

Il existe déjà des applications industrielles dans le domaine de l'IoT utilisant des solutions basées sur un schéma HIBE. Elles permettent de générer, à partir d'une seule clé maîtresse, des millions de clés privées pour autant d'objets connectés tout en préservant leur anonymat si nécessaire.

Toutefois, le schéma HIBE présente un inconvénient important lorsque la clé privée d'un noeud doit être révoquée. La génération des clés dépendant uniquement du couple de clés maîtresses et des identifiants des noeuds, la révocation de la clé d'un noeud suppose de régénérer les clés de tous les noeuds du réseau. Ceci implique de devoir maintenir le générateur PKG en ligne ainsi que les canaux auxiliaires pour la transmission des clés secrètes. Les schémas IBE ou HIBE avec possibilités de révocation de clés sont désignés respectivement par les acronymes RIBE (*Revocable IBE*) et RHIBE (*Revocable HIBE*). Un schéma RIBE peut être considéré comme un cas particulier de schéma RHIBE avec une profondeur d'arborescence $d = 1$.

Différentes solutions de RHIBE ne nécessitant pas de devoir régénérer l'ensemble des clés des noeuds du réseau en cas de révocation sont connues de l'état de la technique.

Une première solution a été proposée dans l'article de de R. Sharma et al. intitulé « H-IBE : Hybrid-Identity based encryption approach for cloud security with outsourced révocation » publié dans Proc. of 2016 Int'l Conf. on Signal Processing, Communication, Power, and Embedded System (SCOPES), 3-5 Oct. 2016. Celle-ci est basée sur la combinaison d'un schéma de chiffrement IBE et d'un schéma de chiffrement ABE. La méthode fait appel à une entité additionnelle, distincte du générateur PKG, chargée de mettre à jour les clés privées des noeuds en fonction d'un attribut caractéristique de l'appartenance ou non à une liste de noeuds révoqués. Ce schéma ne se prête toutefois pas à une architecture hiérarchisée telle que décrite précédemment.

Plus récemment, l'article de S. Wang et al. intitulé « Simplified revocable hierarchy identity-based encryption from lattices », publié dans Proc. of 18th Int'l Conf. On Cryptology and Network Security, CANS 2019, Lecture Notes in Computer Science, vol. 11829, pages 99-119 propose deux schémas RHIBE avec deux niveaux de sécurité distincts (modèle standard et modèle de l'oracle aléatoire) basé sur des réseaux euclidiens et l'approche LWE (Learning With Errors) de Regev. Si ces schémas RHIBE, connus sous l'acronyme RHIBE WZH+, présentent l'avantage d'être « post-quantiques » autrement dit de pouvoir résister à des attaques utilisant un ordinateur quantique, ils sont en revanche inapplicables à un réseau IoT dans lequel les noeuds disposent nécessairement de ressources calculatoires contraintes. Ainsi, par exemple dans le schéma RHIBE WZH+, la taille des chiffrés est de 1 Mbit pour 1 bit en clair.

*A contrario,* on connaît des schémas IBE « post quantiques » beaucoup moins gourmands en ressources calculatoires, tel que le schéma DLP proposé dans l'article de L. Ducas et al. intitulé « Efficient identity-based encryption over NTRU lattices » publié dans Proc. of Int'l Conférence on the Theory and Application of Cryptology and Information Security, ASIACRYPT 2014, Lectures notes on computer science, vol. 8874, pages 22-41. Ainsi, par exemple dans le schéma DLP, la taille des chiffrés est de l'ordre de 31 Koctet.

Un objet de la présente invention est par conséquent de proposer un schéma RHIBE post-quantique qui puisse être utilisé dans un réseau IoT. De manière plus générale, l'objet de la présente invention est de proposer un schéma HIBE, et encore plus généralement un schéma de chiffrement fonctionnel (FE) qui puisse s'appliquer à un réseau dont une partie des noeuds ne disposent que de ressources calculatoires très limitées par rapport aux autres noeuds du réseau.

**EXPOSÉ DE L'INVENTION**

La présente invention est définie par un système cryptographique hiérarchique comprenant un réseau de noeuds divisé en au moins un premier sous-ensemble et un second sous-ensemble de noeuds disjoints, les ressources calculatoires des noeuds du premier sous-ensemble étant supérieures aux ressources calculatoires des noeuds du second sous-ensemble, ledit système cryptographique hiérarchique étant orignal en ce qu'un premier schéma cryptographique fonctionnel ($SC_m$) est déployé sur le premier sous-ensemble de noeuds et qu'un second schéma cryptographique fonctionnel ($SC_s$) est déployé sur le second sous-ensemble de noeuds, le second schéma cryptographique fonctionnel comportant une première primitive cryptographique (*Setup*) destinée à générer un couple de clés maîtresses privée et publique, $Msk_s$, $Mpk_s$, permettant de générer ensuite, de proche en proche, à l'aide d'une seconde primitive cryptographique (*Derive*) une clé privée pour chacun des noeuds du second sous-ensemble, ladite première primitive cryptographique générant le couple de clés maîtresses privée et publique à partir d'un germe (*seed$_s$*), ledit germe étant obtenu par une primitive cryptographique (*Derive*), dite de connexion à partir au moins de la clé privée d'un noeud extrémal du premier sous-ensemble, ladite primitive cryptographique de connexion étant une fonction à sens unique.

De préférence, le niveau de sécurité de la primitive cryptographique de connexion est supérieur ou égal au niveau de sécurité de la première primitive cryptographique.

Avantageusement, la primitive cryptographique de connexion comprend comme argument la sortie d'un compteur, incrémentée à chaque mise à jour des clés maîtresses privée et publique, *Msk$_s$, Mpk$_s$*.

La fonction à sens unique est typiquement une fonction de hachage.

La première primitive cryptographique peut utiliser ledit germe pour générer un nombre pseudo-aléatoire.

Selon un mode de réalisation, le premier schéma cryptographique et/ou le second cryptographique est un schéma hiérarchique de chiffrement basé sur l'identité des noeuds (HIBE), l'identité d'un noeud donné étant défini comme la concaténation des identifiants des noeuds traversés par le chemin allant de la racine de l'arborescence dudit schéma, au noeud donné.

Selon un second mode de réalisation, le premier schéma cryptographique et/ou le second cryptographique est un schéma hiérarchique de chiffrement basé sur les attributs des noeuds (HABE), l'attribut d'un noeud donné étant défini comme la concaténation d'attributs de différents rangs des noeuds traversés par le chemin allant de la racine de l'arborescence dudit schéma, au noeud donné. Dans le premier mode de réalisation, le premier schéma cryptographique peut être un schéma hiérarchique de chiffrement basé sur l'identité avec révocation de clés (RHIBE) et que le second schéma peut être un simple schéma de chiffrement basé sur l'identité (IBE).

Dans tous les cas, le premier schéma cryptographique peut être un schéma de chiffrement de type post-quantique alors que le second schéma cryptographique ne l'est pas.

Alternativement, les premier et second schéma cryptographiques peuvent être des premier et second schémas de chiffrement de type post-quantique, le premier schéma de chiffrement post-quantique étant le schéma RHIBE WZH+ et le second schéma de chiffrement post-quantique étant le schéma DLP.

Dans un contexte d'application, le réseau de noeuds peut être un réseau IoT, le premier sous-ensemble comprenant des serveurs distants et le second sous-ensemble comprenant des objets connectés.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

[Fig. 1] représente un schéma de chiffrement asymétrique hiérarchisé fondé sur l'identité ou HIBE (*Hierarchical Identity Based Encryption*) connue de l'état de la technique ;

[Fig. 2] représente de manière schématique un cas d'usage dans lequel peut être déployé un système de chiffrement hiérarchique hybride selon l'invention ;

[Fig. 3] représente un mécanisme de génération de clés dans un système de chiffrement hiérarchique hybride selon un premier mode de réalisation de l'invention ;

[Fig. 4] représente une application à un réseau IoT du chiffrement hiérarchique hybride de la Fig. 3 ;

[Fig. 5] représente un mécanisme de génération de clés dans un système de chiffrement hiérarchique hybride selon un second mode de réalisation de l'invention ;

[Fig. 6] représente un mécanisme de génération de clés dans un système de chiffrement hiérarchique hybride selon un mode général de réalisation de l'invention.

## EXPOSÉ DÉTAILLÉ DE MODES DE RÉALISATION PARTICULIERS

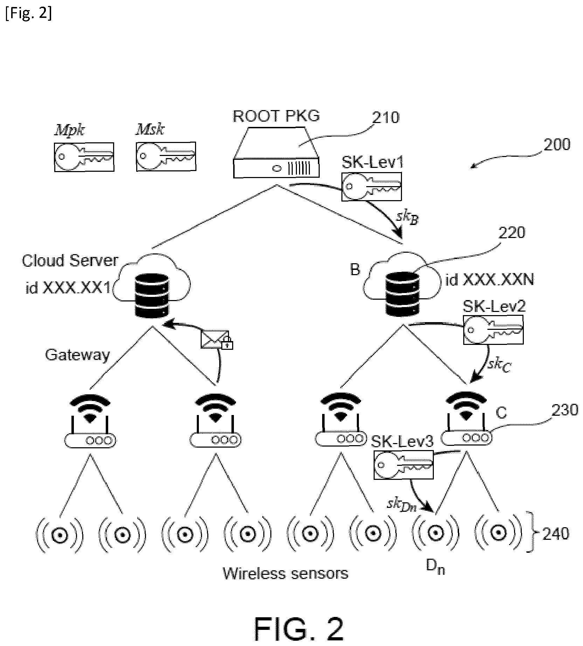

Nous considérons dans la suite un réseau comprenant un premier sous-ensemble de noeuds et un second sous-ensemble de noeuds, disjoint du premier sous-ensemble, les noeuds du second sous-ensemble disposant de ressources calculatoires contraintes par rapport aux noeuds du premier sous-ensemble. Nous nous placerons, sans perte de généralité, dans un cas d'usage de la présente invention, à savoir un réseau IoT, tel qu'illustré en Fig. 2.

Les objets connectés, 240, par exemple des capteurs peuvent établir des liaisons sans fil avec des passerelles, 230, reliées au réseau d'amenée. Des serveurs distants (*cloud servers*) ou en périphérie de réseau (*edge servers*), 220, peuvent stocker et effectuer des calculs sur les données des capteurs qui leur sont transmises. Enfin, un générateur PKG, 210, qui peut prendre la forme par exemple d'un module HSM (*Hardware Security Module*) au sein d'un serveur distant (non représenté), joue le rôle d'autorité racine dans une infrastructure de gestion de clés.

Dans le réseau IoT, 200, les objets connectés (par exemple des capteurs sans fil) forment un second sous-ensemble de noeuds à ressources contraintes par rapport aux noeuds du premier sous-ensemble de noeuds (serveurs distants ou en périphérie de réseau).

Comme indiqué dans la partie introductive, déployer une infrastructure RHIBE post-quantique, telle que celle basée sur le schéma RHIBE WZH+, n'est pas envisageable en raison des faibles ressources calculatoires des objets connectés. Une première idée à la base de la présente invention est de prévoir une infrastructure de gestion de clés basée sur un schéma cryptographique hybride, comprenant un premier schéma (R)HIBE déployé sur le premier sous-ensemble de noeuds et un second schéma (R)HIBE déployé sur le second sous-ensemble de noeuds du réseau, les deux schémas étant liés par une primitive cryptographique de connexion comme décrit plus loin.

Le premier (resp. second) schéma cryptographique est adapté aux ressources calculatoires des noeuds du premier (resp. second) sous-ensemble et assure le niveau de sécurité requis au sein de celui-ci.

La primitive de connexion entre les deux schémas cryptographiques permet à la fois d'isoler les deux sous-ensembles de noeuds l'un de l'autre, en termes de sécurité, et de rendre le second sous-ensemble hiérarchiquement dépendant du premier. Par isolation, on entend qu'une atteinte portée à la sécurité d'un sous-ensemble ne compromet pas la sécurité de l'autre. Par dépendance hiérarchique, on comprend que les clés des noeuds du second sous-ensemble peuvent être révoquées ou mises à jour sans modification des clés du premier sous ensemble mais que l'inverse est faux. En outre, le calcul des clés du second sous ensemble dépend d'au moins une partie des clés du premier sous-ensemble.

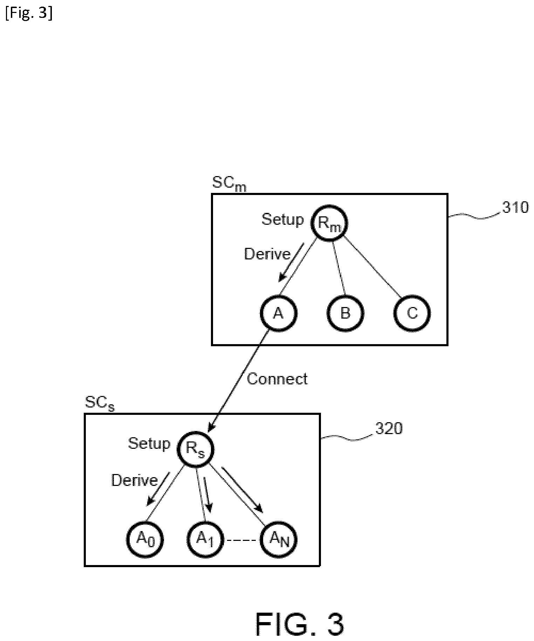

La Fig. 3 représente un schéma de chiffrement hiérarchique hybride selon un premier mode de réalisation de l'invention.

Le premier sous-ensemble de noeuds, représenté en 310, présente une première architecture cryptographique arborescente (R)HIBE. Elle comprend notamment un premier générateur PKG (pouvant contenir un module HSM) à sa racine, dit générateur maître, $R_m$, et aboutit à des noeuds extrémaux (feuilles), notés ici A, B, C. Le second sous-ensemble de noeuds, représenté en 320, présente une seconde architecture arborescente (R)HIBE, dans le cas illustré une architecture IBE, comprenant, à sa racine $R_s$, un second générateur PKG (pouvant contenir un module HSM), dit générateur esclave, et des noeuds extrémaux, notés ici $A_0$, $A_1$,...,$A_N$.

Le schéma (R)HIBE, $SC_m$, de la première architecture cryptographique est défini par les primitives suivantes :

[Math.1]

$$Setup\left(1^{\lambda_m}, d_m\right) \rightarrow Msk_m, Mpk_m \qquad (1\text{-}1)$$

[Math.2]

$$Derive\left(Mpk_m, Id_{path(v)}, sk_{parent(v)}\right) \rightarrow sk_v \qquad (1\text{-}2)$$

[Math.3]

$$Encrypt\left(Mpk_m, Id_{path(v)}; \mu\right) \rightarrow \overline{\mu} \qquad (1\text{-}3)$$

[Math.4]

$$Decrypt\left(Mpk_m, sk_v; \overline{\mu}\right) \rightarrow \mu \qquad (1\text{-}4)$$

où $\lambda_m$ et $d_m$ sont respectivement le niveau de sécurité du schéma $SC_m$ et la profondeur de son arborescence ; $Msk_m$, $Mpk_m$ les clés maîtresses privée et publique de ce schéma ; $Id_{path(v)}$ la liste des identifiants des noeuds sur le chemin de l'arborescence entre la racine jusqu'au noeud $v$ ; $sk_v$ et $sk_{parent(v)}$ respectivement la clé privée du noeud $v$ et de son noeud parent dans l'arborescence ; $Id_{path(v')}$ est la liste des identifiants des noeuds sur le chemin de l'arborescence entre la racine jusqu'au noeud $v'$, destinataire du message $\mu$ ; Le schéma (R)HIBE, $SC_s$, de la seconde architecture cryptographique est, quant à lui, défini par les primitives suivantes :

[Math.5]

$$Setup\left(1^{\lambda_s}, d_s, seed_s\right) \rightarrow Msk_s, Mpk_s \qquad (2\text{-}1)$$

[Math.6]

$$Derive\left(Mpk_s, Id_{path(v)}, sk_{parent(v)}\right) \rightarrow sk_v \qquad (2\text{-}2)$$

[Math.7]

$$Encrypt\left(Mpk_s, Id_{path(v)}; \mu\right) \rightarrow \overline{\mu} \qquad (2\text{-}3)$$

[Math.8]

$$Decrypt\left(Mpk_s, sk_v; \overline{\mu}\right) \rightarrow \mu \qquad (2\text{-}4)$$

où $\lambda_s$ et $d_s$ sont respectivement le niveau de sécurité du schéma $SC_s$ et la profondeur de son arborescence ; $Msk_s$, $Mpk_s$ sont les clés maîtresses privée et publique de ce schéma et $seed_s$ est un germe utilisé par la primitive cryptographique *Setup* pour générer ce couple de clés maîtresses.

Le germe $seed_s$ est fourni par la primitive de connexion permettant de lier le schéma $SC_s$ au schéma $SC_m$, cette primitive étant définie par :

[Math.9]

$$Connect\left(sk_{leaf}, param\right) \rightarrow seed_s \qquad (3)$$

où $sk_{leaf}$ est la clé privée d'un noeud extrémal de l'arborescence du schéma $SC_m$ et *param* est un paramètre optionnel. Dans l'exemple illustré en Fig. 3, le noeud extrémal en question est le noeud A.

La primitive *Connect* est une fonction à sens-unique, par exemple une fonction de hachage cryptographique, telle que la fonction SHA3, de manière à isoler la sécurité du premier sous-ensemble de celle du second sous-ensemble. Le paramètre optionnel *param* pourra être la sortie d'un compteur incrémenté à chaque nouvelle mise à jour (autrement dit un numéro de version), de manière à éviter les attaques par rejeu. Le cas échéant, la clé publique $Mpk_m$ peut également faire partie des arguments de la primitive *Connect* .

Le niveau de sécurité de la primitive *Connect* est avantageusement choisi supérieur ou égal au niveau de sécurité, $\lambda_s$, de la primitive cryptographique *Setup* du schéma $SC_s$.

La primitive *Setup* du schéma $SC_s$ pourra utiliser le germe $seed_s$ pour générer un nombre pseudo-aléatoire, par exemple au moyen d'un générateur PRNG, de manière à former tout ou partie de la clé maîtresse privée, $Msk_s$. Dans le cas particulier d'un réseau IoT, le premier schéma $SC_m$ pourra être un schéma RHIBE post quantique tel que, par exemple RHIBE WZH+, et le second schéma pourra être un schéma IBE tel que DLP, présentés dans la partie introductive.

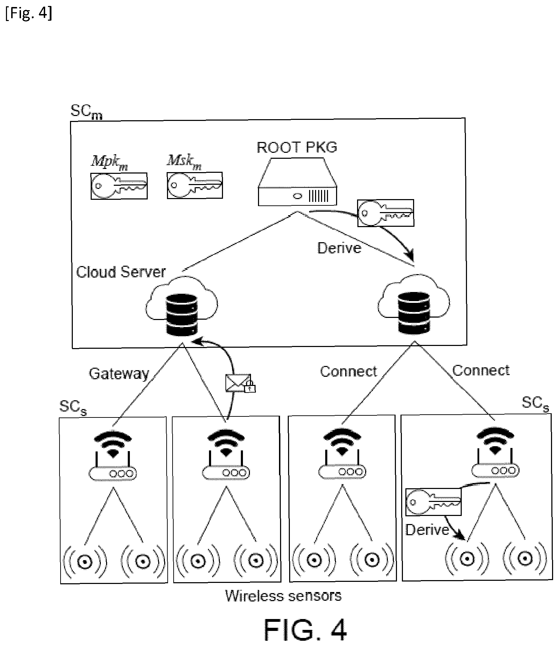

La Fig. 4 illustre ce cas particulier, le premier sous-ensemble comprenant le noeud racine hébergeant un module HSM, les serveurs de calcul (serveurs distants ou en périphérie de réseau et les passerelles (points d'accès ou stations de base par exemple), et le second sous ensemble étant constitué par les objets connectés. Le schéma de chiffrement hiérarchique hybride présenté ci-dessus est basé sur l'identité des noeuds (exprimée sous la forme d'une concaténation d'identifiants), IBE. De manière similaire, on peut prévoir un chiffrement hiérarchique hybride basé sur des attributs de ces noeuds, (R)HABE, l'attribut d'un noeud étant défini par le chemin dans l'arborescence décrit entre la racine et le noeud en question. Plus précisément, l'attribut d'un noeud extrémal $v$ pourra prendre la forme $Att_{path(v)} = Att_A\|...\|Att_v$ où $Att_A$, ..., $Att_v$ sont des valeurs d'attribut de rang $1,...,\lambda$, A étant la racine et $\lambda$ étant la profondeur de l'arborescence. A titre illustratif, un attribut de premier rang pourra être une entreprise, celui d'un deuxième rang pourra être un département de cette entreprise, celui d'un troisième rang pourra être un service au sein de ce département, etc.

Le schéma (R)HABE, $SC_m$, de la première architecture cryptographique est défini par les primitives suivantes :

[Math.10]

$$Setup\left(1^{\lambda_m}, d_m\right) \rightarrow Msk_m, Mpk_m \qquad (4\text{-}1)$$

[Math.11]

$$Derive\left(Mpk_m, Att_{path(v')}, sk_{parent(v)}\right) \rightarrow sk_v \qquad (4\text{-}2)$$

[Math.12]

$$Encrypt\left(Mpk_m, Att_{path(v')}; \mu\right) \rightarrow \overline{\mu} \qquad (4\text{-}3)$$

[Math.13]

$$Decrypt\left(Mpk_s, sk_{v'}; \overline{\mu}\right) \rightarrow \mu \qquad (4\text{-}4)$$

avec les mêmes conventions de notation que précédemment. De manière similaire, le schéma (R)HABE, $SC_s$, de la seconde architecture cryptographique est défini par les primitives suivantes :

[Math.14]

$$Setup\left(1^{\lambda_s}, d_s, seed_s\right) \rightarrow Msk_s, Mpk_s \qquad (5\text{-}1)$$

[Math.15]

$$Derive\left(Mpk_s, Att_{path(v)}, sk_{parent(v)}\right) \rightarrow sk_v \qquad (5\text{-}2)$$

[Math.16]

$$Encrypt\left(Mpk_s, Att_{path(v')}; \mu\right) \rightarrow \overline{\mu} \qquad (5\text{-}3)$$

[Math.17]

$$Decrypt\left(Mpk_s, sk_{v'}; \overline{\mu}\right) \rightarrow \mu \qquad (5\text{-}4)$$

avec les mêmes conventions de notation que précédemment. Le germe $seed_s$ est obtenu au moyen d'une primitive de connexion permettant de lier le schéma $SC_s$ au schéma $SC_m$, cette primitive étant définie par :

[Math.18]

$$Connect\left(sk_{leaf}, param\right) \rightarrow seed_s \qquad (6)$$

où $sk_{leaf}$ est la clé privée d'un noeud extrémal de l'arborescence du schéma $SC_m$ et *param* est un paramètre optionnel. Les différentes variantes de réalisation exposées pour le schéma (R)HABE s'appliquent également ici. En particulier la primitive de connexion pourra être basée sur une fonction à sens unique et *param*

pourra être la sortie d'un compteur pour éviter les attaques par rejeu.

Dans d'autres modes de réalisation, le premier schéma $SC_m$ pourra être du type (R)HIBE et le second schéma $SC_s$ pourra être du type (R)HABE, ou inversement. Dans tous les cas, les schémas choisis seront adaptés aux ressources calculatoires respectives du premier et du second sous-ensembles.

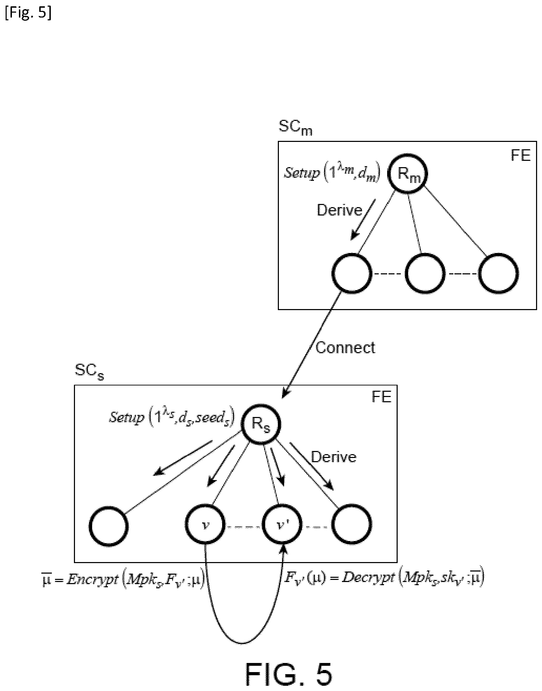

De manière plus générale, le schéma de chiffrement hiérarchique hybride selon la présente invention peut être fondé sur des fonctions, chaque noeud disposant alors d'une clé secrète (ou privée) lui permettant d'évaluer une fonction associée à cette clé. Un tel schéma, connu sous le terme de chiffrement fonctionnel (FE), peut être considéré comme une généralisation du chiffrement basé sur l'identité et du chiffrement basé sur des attributs. Il peut se décliner sous la forme d'une version hiérarchique hybride (avec possible révocation de clés associées à ces fonctions) au sens de la présente invention, d'où l'acronyme (R)HFE, telle que représentée en Fig. 5.

Le schéma (R)HFE, $SC_m$, de la première architecture cryptographique est défini par les primitives suivantes :

[Math.19]

$$Setup\left(1^{\lambda_m}, d_m\right) \rightarrow Msk_m, Mpk_m \qquad (7\text{-}1)$$

[Math.20]

$$Derive\left(Mpk_m, F_v, sk_{parent(v)}\right) \rightarrow sk_v \qquad (7\text{-}2)$$

[Math.21]

$$Encrypt\left(Mpk_m, F_{v'}; \mu\right) \rightarrow \overline{\mu} \qquad (7\text{-}3)$$

[Math.22]

$$Decrypt\left(Mpk_m, sk_v; \overline{\mu}\right) \rightarrow F_{v'}(\mu) \qquad (7\text{-}4)$$

où $F_v$ est la fonction associée au noeud $v$, autrement dit la fonction que ce noeud peut évaluer grâce à la connaissance de sa clé privée, $sk_v$. De manière similaire, le schéma (R)HFE, $SC_s$, de la seconde architecture cryptographique est défini par les primitives suivantes :

[Math.23]

$$Setup\left(1^{\lambda_s}, d_s, seed_s\right) \rightarrow Msk_s, Mpk_s \qquad (8\text{-}1)$$

[Math.24]

$$Derive\left(Mpk_s, F_v, sk_{parent(v)}\right) \rightarrow sk_v \qquad (8\text{-}2)$$

[Math.25]

$$Encrypt\left(Mpk_s, F_{v'}; \mu\right) \rightarrow \overline{\mu} \qquad (8\text{-}3)$$

[Math.26]

$$Decrypt\left(Mpk_{s}, sk_{v}; \overline{\mu}\right) \rightarrow F_{v}(\mu) \qquad (8\text{-}4)$$

Le germe *seed_s* est obtenu au moyen d'une primitive de connexion permettant de lier le schéma $SC_s$ au schéma $SC_m$, cette primitive étant définie par :
[Math.27]

$$Connect\left(sk_{leaf}, param\right) \rightarrow seed_{s} \qquad (9)$$

où $sk_{leaf}$ est la clé privée, correspondant à la fonction $F_{leaf}$ d'un noeud extrémal de l'arborescence du schéma $SC_m$ et *param* est un paramètre optionnel. Les différentes variantes de réalisation exposées précédemment s'appliquent également et ne seront pas répétés ici.

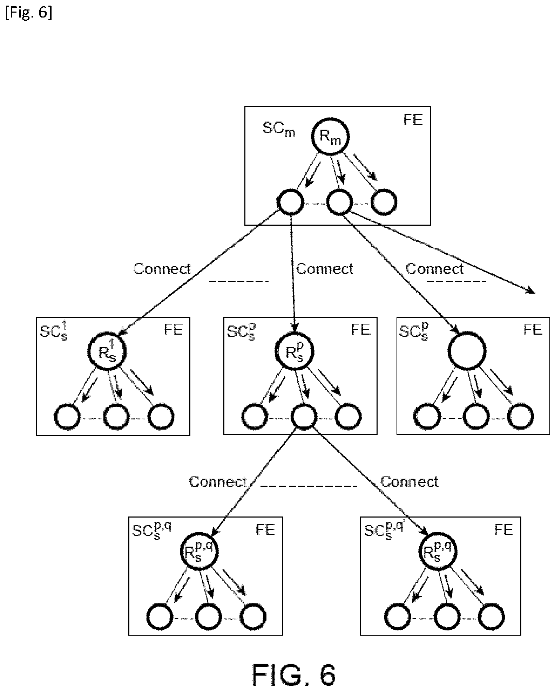

Enfin, le chiffrement hiérarchique hybride représenté en Fig. 3 ou en Fig. 5 ne comprend qu'un schéma maître $SC_m$ pour un premier sous-ensemble de noeuds et un schéma esclave $SC_s$ pour un second sous-ensemble de noeuds. De manière générale, cette dépendance hiérarchique peut être itérée en profondeur et en largeur pour construire un schéma arborescent plus complexe. Ainsi, la Fig. 6 montre un tel exemple de chiffrement arborescent hybride.

Le réseau se divise alors en une pluralité de sous-ensembles de noeuds disjoints, un schéma cryptographique maitre $SC_m$ étant déployé sur un premier sous-ensemble et des schémas cryptographiques, notés ici $SC_s^{p,q}$ étant déployés sur des sous-ensembles de rangs inférieurs. Les schémas cryptographiques sont de complexité adaptée aux ressources calculatoires des sous-ensembles de noeuds sur lesquels ils sont déployés.

Les schémas cryptographiques $SC_m$ et $SC_s^{p,q}$ peuvent être de type (R)(H)FE, comme décrit plus haut. Chaque schéma cryptographique de rang inférieur $SC_s^{p,q}$ est lié à un schéma cryptographique de rang supérieur, $SC_s^{p}$, et chaque schéma cryptographique de rang supérieur est lié au schéma cryptographique $SC_m$, les liaisons entre les différents schémas étant assurés par des primitives *Connect* comme décrit plus haut.

## Revendications

1. Système cryptographique hiérarchique comprenant un réseau de noeuds divisé en au moins un premier sous-ensemble et un second sous-ensemble de noeuds disjoints, les ressources calculatoires des noeuds du premier sous-ensemble étant supérieures aux ressources calculatoires des noeuds du second sous-ensemble, **caractérisé en ce qu'**un premier schéma cryptographique fonctionnel ($SC_m$) est déployé sur le premier sous-ensemble de noeuds et qu'un second schéma cryptographique fonctionnel ($SC_s$) est déployé sur le second sous-ensemble de noeuds, le second schéma cryptographique fonctionnel comportant une première primitive cryptographique (*Setup*) destinée à générer un couple de clés maîtresses privée et publique, $Msk_s$, $Mpk_s$, permettant de générer ensuite, de proche en proche, à l'aide d'une seconde primitive cryptographique (*Derive*) une clé privée pour chacun des noeuds du second sous-ensemble, ladite première primitive cryptographique générant le couple de clés maitresses privée et publique à partir d'un germe (*seed_s*), ledit germe étant obtenu par une primitive cryptographique (*Derive*), dite de connexion à partir au moins de la clé privée d'un noeud extrémal du premier sous-ensemble, ladite primitive cryptographique de connexion étant une fonction à sens unique.

2. Système cryptographique hiérarchique selon la revendication 1, **caractérisé en ce que** le niveau de sécurité de la primitive cryptographique de connexion est supérieur ou égal au niveau de sécurité de la première primitive cryptographique.

3. Système cryptographique hiérarchique selon la revendication 1 ou 2, **caractérisé en ce que** la primitive cryptographique de connexion comprend comme argument la sortie d'un compteur, incrémentée à chaque mise à jour des clés maîtresses privée et publique, $Msk_s$, $Mpk_s$.

4. Système cryptographique hiérarchique selon la revendication 3, **caractérisé en ce que** la fonction à sens unique est une fonction de hachage.

**5.** Système cryptographique hiérarchique selon l'une des revendications précédentes, **caractérisé en ce que** la première primitive cryptographique utilise ledit germe pour générer un nombre pseudo-aléatoire.

**6.** Système cryptographique hiérarchique selon l'une des revendications 1 à 5, **caractérisé en ce que** le premier schéma cryptographique et/ou le second cryptographique est un schéma hiérarchique de chiffrement basé sur l'identité des noeuds (HIBE), l'identité d'un noeud donné étant défini comme la concaténation des identifiants des noeuds traversés par le chemin allant de la racine de l'arborescence dudit schéma, au noeud donné.

**7.** Système cryptographique hiérarchique selon l'une des revendications 1 à 5, **caractérisé en ce que** le premier schéma cryptographique et/ou le second cryptographique est un schéma hiérarchique de chiffrement basé sur les attributs des noeuds (HABE), l'attribut d'un noeud donné étant défini comme la concaténation d'attributs de différents rangs des noeuds traversés par le chemin allant de la racine de l'arborescence dudit schéma, au noeud donné.

**8.** Système cryptographique hiérarchique selon l'une des revendications 1 à 5, **caractérisé en ce que** le premier schéma cryptographique est un schéma hiérarchique de chiffrement basé sur l'identité avec révocation de clés (RHIBE) et que le second schéma est un simple schéma de chiffrement basé sur l'identité (IBE).

**9.** Système cryptographique hiérarchique selon la revendication 1, **caractérisé en ce que** le premier schéma cryptographique est un schéma de chiffrement de type post-quantique alors que le second schéma cryptographique ne l'est pas.

**10.** Système cryptographique hiérarchique selon la revendication 8, **caractérisé en ce que** les premier et second schéma cryptographiques sont des premier et second schémas de chiffrement de type post-quantique, le premier schéma de chiffrement post-quantique étant le schéma RHIBE WZH+ et le second schéma de chiffrement post-quantique étant le schéma DLP.

**11.** Système cryptographique hiérarchique selon l'une des revendications précédentes, **caractérisé en ce que** le réseau de noeuds est un réseau IoT, le premier sous-ensemble comprenant des serveurs distants et le second sous-ensemble comprenant des objets connectés.

[Fig. 1]

FIG. 1

[Fig. 2]

FIG. 2

[Fig. 3]

FIG. 3

[Fig. 4]

FIG. 4

[Fig. 5]

FIG. 5

[Fig. 6]

FIG. 6

Europäisches
Patentamt

European
Patent Office

Office européen
des brevets

# RAPPORT DE RECHERCHE EUROPEENNE

Numéro de la demande

**EP 23 21 1574**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RAYMOND K ZHAO ET AL: "Quantum-safe HIBE: does it cost a Latte?", IACR, INTERNATIONAL ASSOCIATION FOR CRYPTOLOGIC RESEARCH , vol. 20220503:130924 3 mai 2022 (2022-05-03), pages 1-22, XP061071185, Extrait de l'Internet: URL:https://eprint.iacr.org/2021/222.pdf [extrait le 2022-05-03] * section 2.1, annexes A, B * ----- | 1-6,9-11 | INV. H04L9/30 |
| X | SAM KUMAR ET AL: "JEDI: Many-to-Many End-to-End Encryption and Key Delegation for IoT", ARXIV.ORG, CORNELL UNIVERSITY LIBRARY, 201 OLIN LIBRARY CORNELL UNIVERSITY ITHACA, NY 14853, 31 mai 2019 (2019-05-31), XP081611409, * sections 3.3, 5, 7.1.2; figure 2 * ----- | 1-8,11 | |
| A | DAVID J WU ET AL: "Privacy, Discovery, and Authentication for the Internet of Things", ARXIV.ORG, CORNELL UNIVERSITY LIBRARY, 201 OLIN LIBRARY CORNELL UNIVERSITY ITHACA, NY 14853, 23 avril 2016 (2016-04-23), XP080697484, * section 7 * ----- | 1-11 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 18 mars 2024 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. SHARMA et al.** H-IBE : Hybrid-Identity based encryption approach for cloud security with outsourced révocation. *Proc. of 2016 Int'l Conf. on Signal Processing, Communication, Power, and Embedded System (SCOPES),* 03 Octobre 2016
- **S. WANG et al.** Simplified revocable hierarchy identity-based encryption from lattices. *Proc. of 18th Int'l Conf. On Cryptology and Network Security, CANS 2019, Lecture Notes in Computer Science,* vol. 11829, 99-119
- **L. DUCAS et al.** Efficient identity-based encryption over NTRU lattices. *Proc. of Int'l Conférence on the Theory and Application of Cryptology and Information Security, ASIACRYPT 2014, Lectures notes on computer science,* vol. 8874, 22-41